(19) Europäisches Patentamt
European Patent Office
Office européen des brevets

(11) **EP 4 239 747 A1**

(12) # EUROPEAN PATENT APPLICATION
published in accordance with Art. 153(4) EPC

(43) Date of publication:
**06.09.2023 Bulletin 2023/36**

(21) Application number: **22879572.0**

(22) Date of filing: **30.03.2022**

(51) International Patent Classification (IPC):
***H01M 10/0567*** *(2010.01)* ***H01M 10/052*** *(2010.01)*

(86) International application number:
**PCT/KR2022/004545**

(87) International publication number:
**WO 2023/140429 (27.07.2023 Gazette 2023/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.01.2022 KR 20220007461**

(71) Applicant: **Samsung SDI Co., Ltd.**
**Yongin-si, Gyeonggi-do 17084 (KR)**

(72) Inventors:
- **SON, Seunghyeon**
  **Yongin-si, Gyeonggi-do 17084 (KR)**
- **BAE, Tae Hyon**
  **Yongin-si, Gyeonggi-do 17084 (KR)**
- **KIM, Sanghyung**
  **Yongin-si, Gyeonggi-do 17084 (KR)**
- **LEE, Harim**
  **Yongin-si, Gyeonggi-do 17084 (KR)**

(74) Representative: **Gulde & Partner**
**Patent- und Rechtsanwaltskanzlei mbB**
**Wallstraße 58/59**
**10179 Berlin (DE)**

(54) **ELECTROLYTE FOR RECHARGEABLE LITHIUM BATTERY AND RECHARGEABLE LITHIUM BATTERY INCLUDING SAME**

(57) Provided are an electrolyte for a rechargeable lithium battery including a non-aqueous organic solvent, a lithium salt, and an additive, wherein the additive is a composition including a first compound and a second compound, the first compound is an imide cesium salt compound represented by Chemical Formula 1, and the second compound is a crown ether compound represented by Chemical Formula 2.

Details of Chemical Formulas 1 and 2 are as described in the specification.

FIG. 1

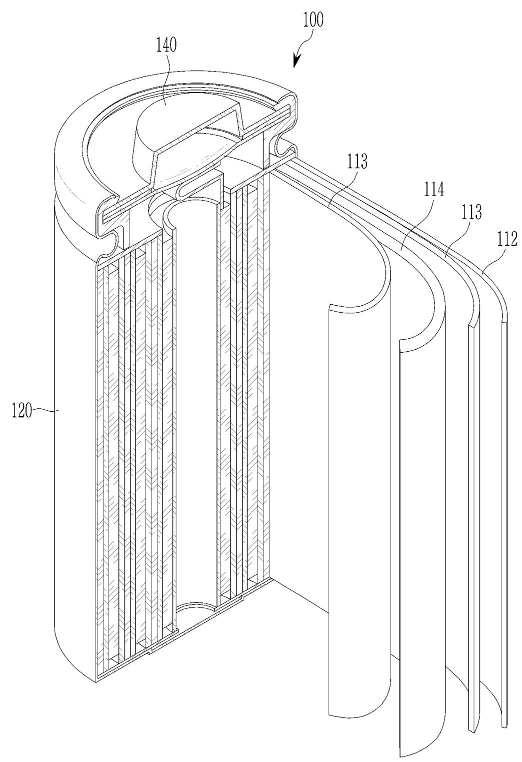




Processed by Luminess, 75001 PARIS (FR)

## Description

### [Technical Field]

This disclosure relates to an electrolyte for a rechargeable lithium battery and a rechargeable lithium battery including the same.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

The electrolyte serves as a medium for moving lithium ions between the negative electrode and the positive electrode, and may generally include an organic solvent in which lithium salt is dissolved, and this electrolyte is important in determining stability and performance of a rechargeable lithium battery.

The electrolyte may universally include, for example, a mixed solvent of high dielectric cyclic carbonates such as propylene carbonate and ethylene carbonate and chain carbonates such as diethyl carbonate, ethyl methyl carbonate and dimethyl carbonate in which a lithium salt such as $LiPF_6$, $LiBF_4$, or LiFSI is added. As the development of batteries in various fields is activated, the development of batteries having high output and high stability in a wide temperature range is becoming more important. In terms of the electrolyte, it is important to develop an optimal combination of an organic solvent and additives capable of providing high output, long cycle-life characteristics, high-temperature storage characteristics, and suppressing swelling, decrease in capacity, and increase in resistance.

### [Disclosure]

[Technical Problem]

An embodiment provides an electrolyte for a rechargeable lithium battery having excellent high-temperature characteristics.

Another embodiment provides a rechargeable lithium battery having improved high-temperature storage characteristics, cycle-life characteristics, and safety by applying the electrolyte.

[Technical Solution]

An embodiment of the present invention provides an electrolyte for a rechargeable lithium battery including a non-aqueous organic solvent, a lithium salt, and an additive, wherein the additive is a composition including a first compound, and a second compound, the first compound is an imide cesium salt compound represented by Chemical Formula 1, and the second compound is a crown ether compound represented by Chemical Formula 2.

[Chemical Formula 1]

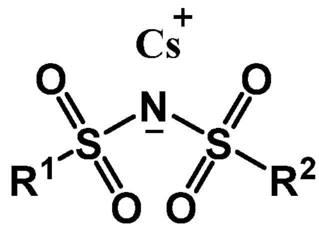

In Chemical Formula 1,

$R^1$ and $R^2$ are a C1 to C3 fluoroalkyl group substituted with one or more fluoro group,

[Chemical Formula 2]

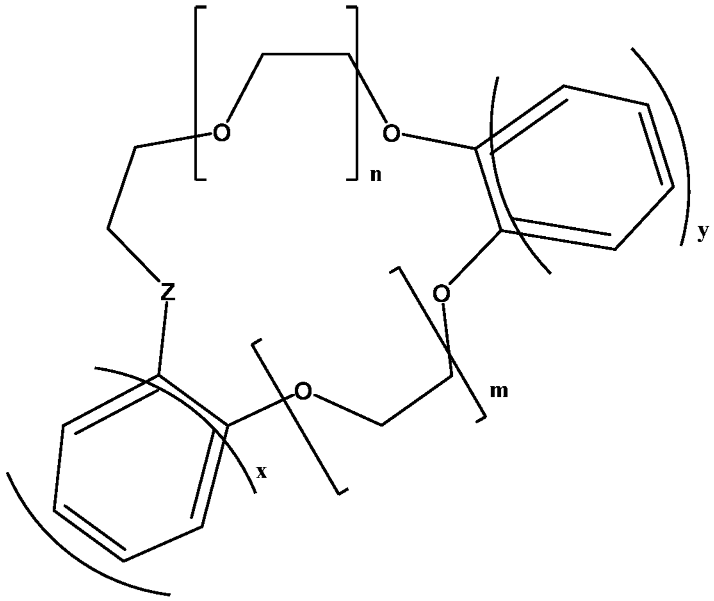

wherein, in Chemical Formula 2,
Z is O or NH,
x and y are independently an integer of 0 or 1, and
m and n are independently one of integers of 1 to 3.

Chemical Formula 1 may be represented by any one of Chemical Formulas 1-1 to 1-3.

[Chemical Formula 1-1] [Chemical Formula 1-2]

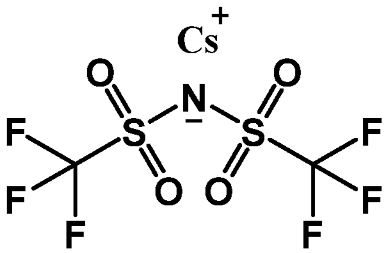

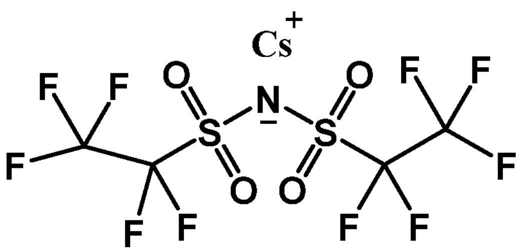

[Chemical Formula 1-3]

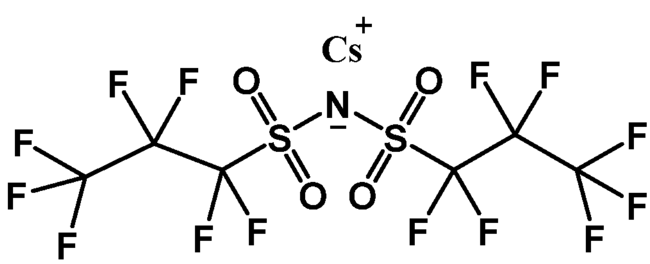

The composition may include the first compound and the second compound in a weight ratio of 1:4 to 1:16.

The composition may include the first compound and the second compound in a weight ratio of 1:4 to 1:8.

The first compound may be included in an amount of 0.1 parts by weight to 2.0 parts by weight based on 100 parts by weight of the electrolyte for the rechargeable lithium battery.
The second compound may be included in an amount of 0.1 parts by weight to less than 10 parts by weight based on 100 parts by weight of the electrolyte for the rechargeable lithium battery.
The composition including the first compound and the second compound may be included in an amount of 0.5 to less than 10 parts by weight based on 100 parts by weight of the electrolyte for the rechargeable lithium battery.
The second compound may be a crown ether compound represented by any one of Chemical Formulas 2-1 to 2-3.

[Chemical Formula 2-1]

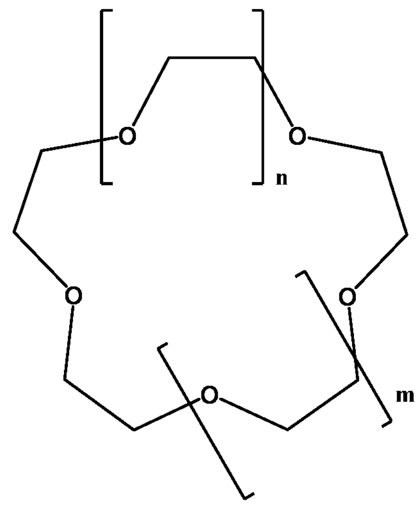

[Chemical Formula 2-2]

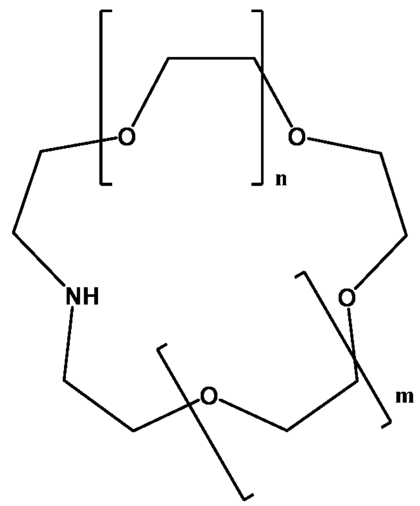

[Chemical Formula 2-3]

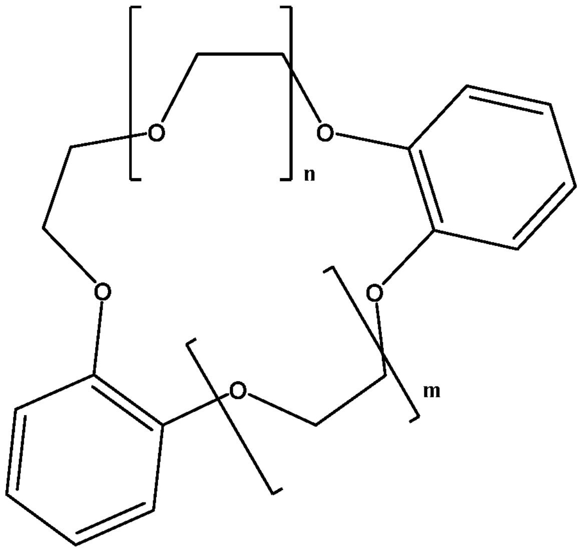

In Chemical Formulas 2-1 to 2-3,
m and n are independently one of integers of 1 to 3.

The second compound may be one or more selected from 15-crown-5, 18-crown-6, 21-crown-7, 24-crown-8, dibenzo-15-crown-5, dibenzo-18-crown-6, dibenzo-21-crown-7, dibenzo-24-crown-8, 1-aza-15-crown-5, 1-aza-18-crown-6, 1-aza-21-crown-7, and 1-aza-24-crown-8.

Another embodiment of the present invention provides a rechargeable lithium battery including a positive electrode including a positive electrode active material, a negative electrode including a negative electrode active material, and the aforementioned electrolyte for the rechargeable lithium battery.

The negative electrode active material may be graphite or may include a Si composite and graphite together.

The Si composite may include a core including Si-based particles and an amorphous carbon coating layer.

The Si-based particle may include a Si-C composite, $SiO_x$ ($0 < x \leq 2$), a Si alloy or a mixture thereof.

The Si-C composite may include a core including Si particles and crystalline carbon and an amorphous carbon coating layer on the surface of the core, and
an average particle diameter of the Si particles may be 50 nm to 200 nm.

[Advantageous Effects]

By increasing a solubility of the additive, an increase in resistance of the battery during high-temperature storage may be suppressed, thereby realizing a rechargeable lithium battery with improved high-temperature characteristics.

**[Description of the Drawings]**

FIG. 1 is a schematic view showing a rechargeable lithium battery according to an embodiment of the present invention.

<Description of Symbols>

100: rechargeable lithium battery
112: negative electrode
113: separator
114: positive electrode
120: battery case
140: sealing member

**[Mode for Invention]**

Hereinafter, a rechargeable lithium battery according to an embodiment of the present invention will be described

in detail with reference to the accompanying drawings. However, these embodiments are exemplary, the present invention is not limited thereto and the present invention is defined by the scope of claims.

In the present specification, unless otherwise defined, "substituted" means that at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least on hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to an embodiment of the present invention includes an electrolyte, a positive electrode, and a negative electrode.

The electrolyte includes a non-aqueous organic solvent, a lithium salt, and an additive, wherein the additive is a composition including a first compound and a second compound, the first compound is an imide cesium salt compound represented by Chemical Formula 1, and the second compound is a crown ether compound represented by Chemical Formula 2.

[Chemical Formula 1]

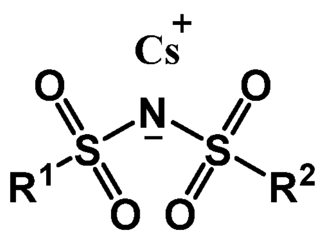

In Chemical Formula 1,

$R^1$ and $R^2$ are a C1 to C3 fluoroalkyl group substituted with one or more fluoro group,

[Chemical Formula 2]

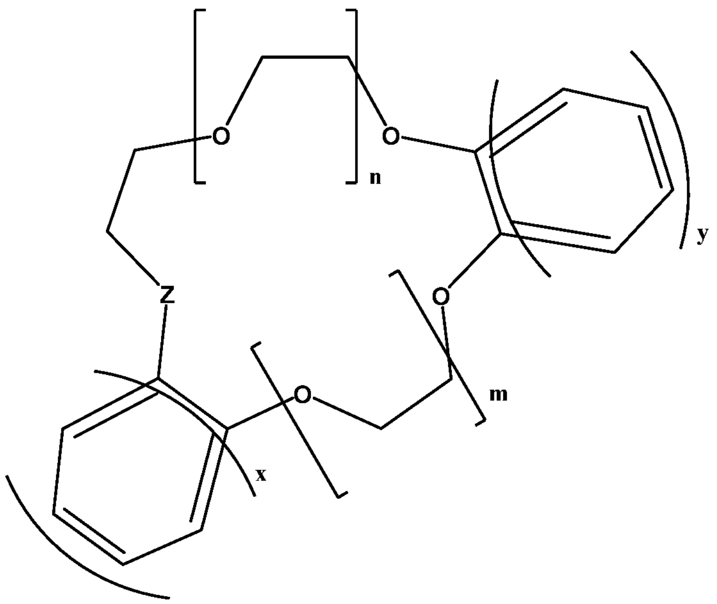

wherein, in Chemical Formula 2,
Z is O or NH,
x and y are independently an integer of 0 or 1, and
m and n are independently one of integers of 1 to 3.

The first compound, which is the imide cesium salt compound represented by Chemical Formula 1, is earlier reduced and decomposed than a carbonate-based solvent included in the non-aqueous organic solvent and thus forms an SEI (solid electrolyte interface) film on the negative electrode to prevent decomposition of the electrolyte and decomposition of the electrode due to the electrolyte decomposition, resultantly suppressing an increase in internal resistance due to gas generation particularly at a high temperature.

However, since the first compound is in the form of a salt and exhibits rapidly reduced solubility at a predetermined concentration or higher in the electrolyte, slightly deteriorating the high-temperature characteristics improvement effect.

The second compound, which is the crown ether compound represented by Chemical Formula 2, when mixed with the first compound, contributes to improving a solubility, activates a mechanism that the first compound is reduced and decomposed and thus forms the SEI film on the negative electrode, further improving the effect of suppressing internal resistance due to the gas generation at a high temperature.

In other words, the first and second compounds are included together to form a more stable SEI on the negative electrode and effectively suppress a side reaction between lithium ions intercalated on the negative electrode and the electrolyte even at the high temperature, ultimately realizing a rechargeable lithium battery with improved high-temperature characteristics due to the suppression of resistance increase and the improvement of storage characteristics.

The first compound may be represented by any one of Chemical Formulas 1-1 to 1-3.

[Chemical Formula 1-1] [Chemical Formula 1-2]

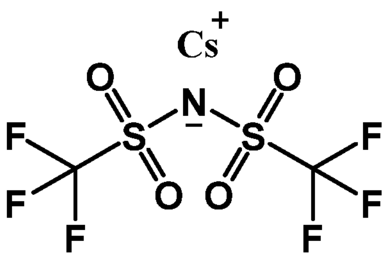

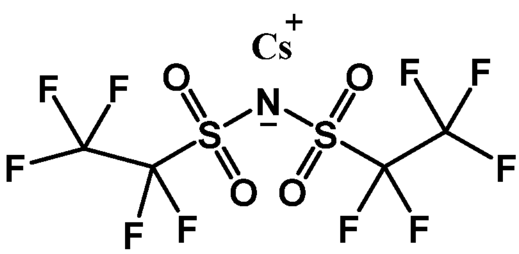

[Chemical Formula 1-3]

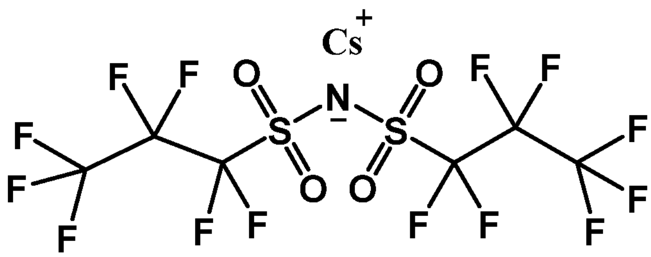

On the other hand, the high-temperature characteristics improvement effect are much more effective, when the first compound, as shown in Chemical Formulas 1-1 to 1-3, has a structure that $R^1$ to $R^3$ of Chemical Formula 1 are alkyl groups substituted with one or more fluoro group and particularly, a $Cs^+(FSO_2)_2N^-$ (CsTFSI) structure, which is confirmed in Table 3, and when $Cs^+(FSO_2)_2N^-$(CsFSI) having a structure that the fluoro group is directly linked to sulfone is used instead of the first compound as an imide cesium salt, since the second compound is required in an excessive amount to improve solubility of CsFSI and thereby, relatively significantly reducing the amount of CsFSI within a range of not deteriorating battery characteristics, the effect of improving the high-temperature characteristics is difficult to expect.

For example, the composition may include the first compound and the second compound in a weight ratio of 1 : 4 to 1 : 16.

In an embodiment, the composition may include the first compound and the second compound in a weight ratio of 1:4 to 1:10, 1:4 to 1:9, or 1:4 to 1:8.

When the mixing ratio of the first compound and the second compound is as described above, improvement of resistance increase suppression and high-temperature storage characteristics may be maximized.

Meanwhile, the first compound may be included in an amount of 0.1 to 2.0 parts by weight, for example, 0.5 to 2.0 parts by weight, 0.5 to 1.5 parts by weight, or 0.5 to 1.25 parts by weight, based on 100 parts by weight of the electrolyte for the rechargeable lithium battery.

In addition, the second compound may be included in an amount of 0.1 to less than 10 parts by weight, for example 0.1 to 8.0 parts by weight, 0.5 to 8.0 parts by weight, 1.0 to 8.0 parts by weight, or 2.0 to 8.0 parts by weigh based on 100 parts by weight of the electrolyte for the rechargeable lithium battery.

The composition including the first compound and the second compound may be included in an amount of 0.5 to less than 10 parts by weight, for example, 1.0 to less than 10 parts by weight, 2.0 to less than 10 parts by weight, or 2.5 to less than 10 parts by weight based on 100 parts by weight of the electrolyte for the rechargeable lithium battery.

In a more specific embodiment, the composition includes the first compound and the second compound in a weight ratio of 1: 4 to 1: 16, and within the above range, the first compound may be included in an amount of 0.1 to 1.25 parts by weight based on 100 parts by weight of the electrolyte for the rechargeable lithium battery, and the second compound may be included in an amount of 2 to 8 parts by weight based on 100 parts by weight of the electrolyte for the rechargeable lithium battery.

In a more specific embodiment, the composition includes the first compound and the second compound in a weight ratio of 1: 4 to 1: 16, and within the above range, the first compound may be included in an amount of 0.5 to 1.25 parts by weight based on 100 parts by weight of the electrolyte for the rechargeable lithium battery, and the second compound may be included in an amount of 4 to 8 parts by weight based on 100 parts by weight of the electrolyte for the rechargeable lithium battery.

In a more specific embodiment, the composition includes the first compound and the second compound in a weight ratio of 1: 4 to 1: 10, and within this range, the first compound may be included in an amount of 0.5 to 1.25 parts by weight based on 100 parts by weight of the electrolyte for the rechargeable lithium battery, and the second compound may be included in an amount of 4 to 8 parts by weight based on 100 parts by weight of the electrolyte for the rechargeable lithium battery.

In a more specific embodiment, the composition includes the first compound and the second compound in a weight ratio of 1: 4 to 1: 8, and within the above range, the first compound may be included in an amount of 1.0 to 1.25 parts by weight based on 100 parts by weight of the electrolyte for the rechargeable lithium battery, and the second compound may be included in an amount of 4 to 8 parts by weight based on 100 parts by weight of the electrolyte for the rechargeable lithium battery.

When the content of the composition and the content of each component in the composition are within the above ranges, a rechargeable lithium battery having improved resistance characteristics during high-temperature storage may be implemented.

In particular, it is expected that the second compound acts as a cation receptor of the first compound and contributes to improving the solubility,

In this respect, when the second compound has a structure including 5 or more ether groups, a solubility of the

first compound may be more effectively improved.

When the number of ether groups included in the second compound is less than 5, it is confirmed that the solubility of the first compound cannot be effectively improved, as described in Table 2, and accordingly, it may be difficult to expect improvement of high-temperature characteristics.

For example, the second compound may be a crown ether compound represented by any one of Chemical Formulas 2-1 to 2-3.

[Chemical Formula 2-1]

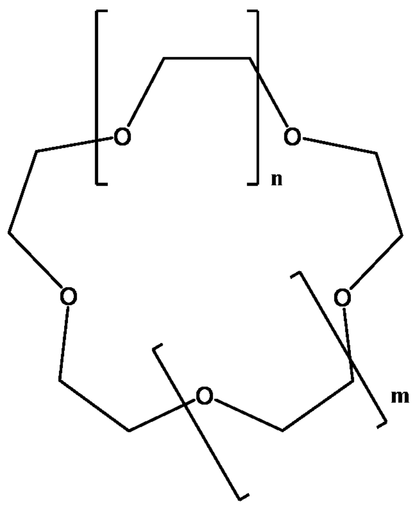

[Chemical Formula 2-2]

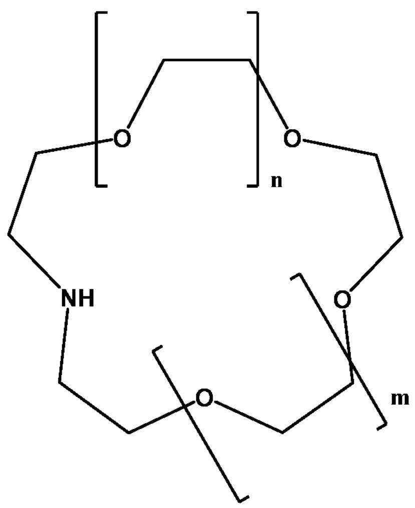

[Chemical Formula 2-3]

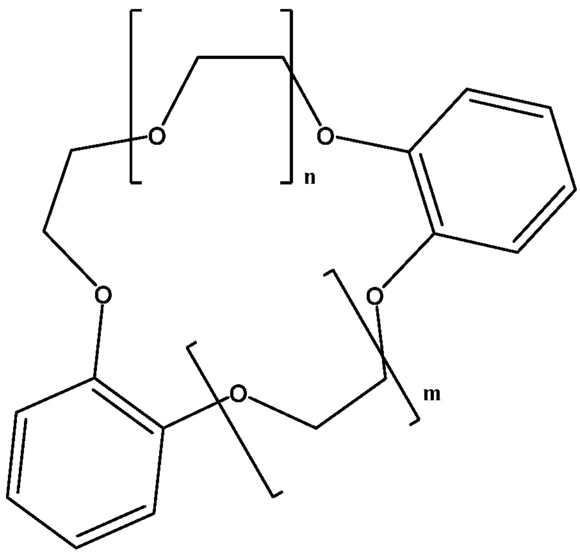

In Chemical Formulas 2-1 to 2-3,
m and n are independently one of integers of 1 to 3.

As a specific example, the second compound may be one or more selected from 15-crown-5, 18-crown-6, 21-crown-7, 24-crown-8, dibenzo-15-crown-5, dibenzo-18-crown-6, dibenzo-21-crown-7, dibenzo-24-crown-8, 1-aza-15-crown-5, 1-aza-18-crown-6, 1-aza-21-crown-7, and 1-aza-24-crown-8.

The non-aqueous organic solvent serves as a medium for transmitting ions taking part in the electrochemical reaction of a battery.

The non-aqueous organic solvent may be a carbonate-based, ester-based, ether-based, ketone-based, alcohol-based, or aprotic solvent.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. The alcohol-based solvent may include ethanol, isopropyl alcohol, and the like, and the aprotic solvent may include nitriles such as $R^1$-CN (wherein $R^1$ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent is prepared by mixing a cyclic carbonate and a chain carbonate. When the cyclic carbonate and chain carbonate are mixed together in a volume ratio of 1:9 to 9:1, a performance of the electrolyte may be improved.

In particular, in an embodiment, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

More specifically, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 3.

[Chemical Formula 3]

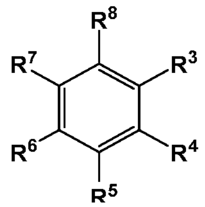

In Chemical Formula 3, $R^3$ to $R^8$ are the same or different and are hydrogen, a halogen, a C1 to C10 alkyl group, a haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate, vinyl ethylene carbonate, or an ethylene carbonate-based compound represented by Chemical Formula 4 as an additive to improve cycle-life of a battery.

[Chemical Formula 4]

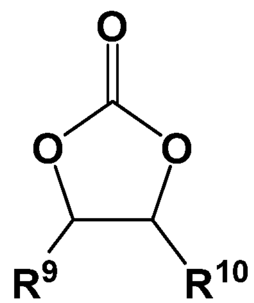

In Chemical Formula 4, $R^9$ and $R^{10}$ are the same or different, and are selected from hydrogen, a halogen, a cyano group (CN), a nitro group ($NO_2$), and a fluorinated C1 to C5 alkyl group, provided that one or more of $R^9$ and $R^{10}$ is selected from a halogen, a cyano group (CN), a nitro group ($NO_2$), and a fluorinated C1 to C5 alkyl group, and $R^9$ and $R^{10}$ are not simultaneously hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. When such an additive for improving cycle-life is further used, its amount may be appropriately adjusted.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include one or more selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$ (wherein x and y are natural numbers, for example an integer of 1 to 20), LiCl, LiI, $LiB(C_2O_4)_2$ (lithium bis(oxalato) borate: LiBOB), LiDFOB (lithium difluoro(oxalato)borate), and $Li[PF_2(C_2O_4)_2]$ (lithium difluoro (bis oxalato) phosphate). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.

The positive electrode active material may include lithiated intercalation compounds that reversibly intercalate and deintercalate lithium ions.

Specifically, one or more of a composite oxide of a metal selected from cobalt, manganese, nickel, and a combination thereof and lithium may be used.

Of course, the composite oxide in which a portion of the metal is substituted with a metal other than another metal may be used, and a phosphate compound of the composite oxide, for example, one or more selected $LiFePO_4$, $LiCoPO_4$, and $LiMnPO_4$ may be used. The lithium composite oxide may have a coating layer on the surface, or the lithium composite oxide may be mixed with another composite oxide having a coating layer. The coating layer may include one or more coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

The positive electrode active material may be, for example, one or more of lithium composite oxides represented by Chemical Formula 5.

[Chemical Formula 5] $Li_xM^1_yM^2_zM^3_{1-y-z}O_2$

In Chemical Formula 5,

$0.5 \leq x \leq 1.8$, $0 < y \leq 1$, $0 \leq z \leq 1$, $0 \leq y+z \leq 1$, $M^1$, $M^2$, and $M^3$ are each independently selected from a meatal of Ni, Co, Mn, Al, Sr, Mg, or La, and a combination thereof.

In an embodiment, the positive electrode active material may be one or more selected from $LiCoO_2$, $LiNiO_2$, $LiMnO_2$, $LiMn_2O_4$, $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1).

For example, the positive electrode active material selected from $LiNi_aMn_bCo_cO_2$ (a+b+c=1), $LiNi_aMn_bCo_cAl_dO_2$ (a+b+c+d=1), and $LiNi_eCo_fAl_gO_2$ (e+f+g=1) may be a high Ni-based positive electrode active material.

For example, in the case of $LiNi_aMn_bCo_cO_2$ (a+b+c=1) and $LiNi_aMn_bCo_cAl_dO_2$ (a+b+c+d=1), the nickel content may be greater than or equal to 60% ($a \geq 0.6$), and more specifically, greater than or equal to 80% ($a \geq 0.8$).

For example, in the case of $LiNi_eCo_fAl_gO_2$ (e+f+g=1), the nickel content may be greater than or equal to 60% ($e \geq 0.6$), and more specifically, greater than or equal to 80% ($e \geq 0.8$).

A content of the positive electrode active material may be 90 wt% to 98 wt% based on the total weight of the positive electrode active material layer.

In an embodiment of the present invention, the positive electrode active material layer may optionally include a conductive material and a binder. In this case, a content of the conductive material and the binder may be 1 wt% to 5 wt%, respectively, based on the total weight of the positive electrode active material layer.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery and examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, $SiO_x$ ($0 < x < 2$), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, $SnO_2$, a Sn-$R^{11}$ alloy (wherein $R^{11}$ is an element selected from an alkali metal, an alkaline-earth metal, a Group 13 element, a Group 14 element, a Group 15 element, a Group 16 element, a transition metal, a rare earth element, and a combination thereof, but not Sn), and the like. One or more of these materials may be mixed with $SiO_2$.

The elements Q and $R^{11}$ may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the negative electrode active material may be graphite or may include a Si composite and graphite together.

When the negative electrode active material includes the Si composite and graphite together, the Si composite and graphite may be included in the form of a mixture, and the Si composite and graphite may be included in a weight ratio of 1:99 to 50:50. More specifically, the Si composite and graphite may be included in a weight ratio of 3: 97 to 20: 80 or 5: 95 to 20: 80.

The Si composite may include a core including Si-based particles and an amorphous carbon coating layer. For example, the Si-based particles may include a Si-C composite, SiOx ($0 < x \leq 2$), a Si alloy or a mixture thereof. For example, the Si-C composite may include a core including Si particles and crystalline carbon, and an amorphous carbon coating layer on the surface of the core.

The crystalline carbon may include, for example, graphite, and more specifically, natural graphite, artificial graphite, or a mixture thereof.

An average particle diameter of the crystalline carbon may be 5 μm to 30 μm.

In the present specification, an average particle diameter may be a particle size (D50) at a volume ratio of 50% in a cumulative size-distribution curve.

In the Si-C composite, an average particle diameter of the Si particles may be 50 nm to 200 nm.

When the average particle diameter of the Si particles is within the above ranges, volume expansion occurring during charging and discharging may be suppressed, and interruption of a conductive path due to particle crushing during charging and discharging may be prevented.

The Si particles may be included in an amount of 1 to 60 wt%, for example, 3 to 60 wt%, based on the total weight of the Si-C composite.

The amorphous carbon may include soft carbon, hard carbon, a mesophase pitch carbonized product, calcined coke, or a mixture thereof.

The amorphous carbon may be included in an amount of 1 part by weight to 50 parts by weight, for example, 5 parts by weight to 50 parts by weight, or 10 parts by weight to 50 parts by weight based on 100 parts by weight of the crystalline carbon.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K,

or Li. Such a thickener may be included in an amount of 0.1 parts by weight to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, one or more of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

## DETAILED DESCRIPTION OF THE EMBODIMENTS

Hereinafter, examples of the present invention and comparative examples are described. These examples, however, are not in any sense to be interpreted as limiting the scope of the invention.

## Manufacture of Rechargeable Lithium Battery Cells

### Comparative Example 1

$LiCoO_2$ as a positive electrode active material, polyvinylidene fluoride as a binder, and ketjen black as a conductive material were mixed in a weight ratio of 97:2:1 and then, dispersed in N-methyl pyrrolidone, preparing positive electrode active material slurry.

The positive electrode active material slurry was coated on a 15 μm-thick Al foil, dried at 100 °C, and pressed, manufacturing a positive electrode.

A negative electrode active material prepared by mixing artificial graphite and an Si-C composite in a weight ratio of 93:7, a styrene-butadiene rubber binder as a binder, and carboxylmethyl cellulose as a thickener were mixed in a weight ratio of 97:1:2 and then, dispersed in distilled water, preparing negative electrode active material slurry.

The Si-C composite included a core including artificial graphite and silicon particles and coal-based pitch coated on the surface of the core.

The negative electrode active material slurry was coated on a 10 μm-thick Cu and then, dried at 100 °C and pressed, manufacturing a negative electrode.

The positive electrode and the negative electrode were assembled with a 25 μm-thick polyethylene separator to manufacture an electrode assembly, and an electrolyte was injected thereinto, manufacturing a rechargeable lithium battery cell.

The electrolyte has a composition as follows.

(Composition of the electrolyte)

Salt: 1.3 M $LiPF_6$
Solvent: ethylene carbonate: propylene carbonate:ethyl propionate: propyl propionate (EC:PC:EP:PP= a volume ratio of 10:20:30:40)

**Comparative Example 2**

A rechargeable lithium battery cell was manufactured in the same manner as in Comparative Example 1, except that 0.2 parts by weight of cesium bis(trifluoromethanesulfonyl) imide (CsTFSI: $Cs^+(CF_3SO_2)_2N^-$) was added to the electrolyte.

(However, in the composition of the electrolyte, "parts by weight" means a relative weight of additives based on 100 weight of the total electrolyte (lithium salt + non-aqueous organic solvent).)

**Comparative Example 3**

A rechargeable lithium battery cell was manufactured in the same manner as in Comparative Example 1, except that 0.5 parts by weight of cesium bis(trifluoromethanesulfonyl) imide (CsTFSI: $Cs^+(CF_3SO_2)_2N^-$) was added to the electrolyte.

**Comparative Example 4**

A rechargeable lithium battery cell was manufactured in the same manner as in Comparative Example 1, except that 5 parts by weight of 18-crown-6 was added to the electrolyte.

**Comparative Example 5**

A rechargeable lithium battery cell was manufactured in the same manner as in Comparative Example 1, except that 10 parts by weight of 18-crown-6 was added to the electrolyte.

**Examples 1 to 3 and Reference Examples 1 to 4**

Rechargeable lithium battery cells were manufactured in the same manner as in Comparative Example 1, except that 0.5 parts by weight of cesium bis(trifluoromethanesulfonyl) imide (CsTFSI: $Cs^+(CF_3SO_2)_2N^-$) and 18-crown-6 were added to the electrolyte in the compositions shown in Table 1.

**Examples 4 to 6 and Reference Examples 5 and 6**

Rechargeable lithium battery cells were manufactured in the same manner as in Comparative Example 1, except that 1.0 part by weight of cesium bis(trifluoromethanesulfonyl) imide (CsTFSI: $Cs^+(CF_3SO_2)_2N^-$) and 18-crown-6 were added to the electrolyte in the compositions shown in Table 1.

**Examples 7 and 8 and Reference Examples 7 and 8**

Rechargeable lithium battery cells were manufactured in the same manner as in Comparative Example 1, except that 1.25 parts by weight of cesium bis(trifluoromethanesulfonyl) imide (CsTFSI: $Cs^+(CF_3SO_2)_2N^-$) and 18-crown-6 were added to the electrolyte in the compositions shown in Table 1.

**Reference Examples 9 to 11**

Rechargeable lithium battery cells were manufactured in the same manner as in Comparative Example 1, except that 2.5 parts by weight of cesium bis(trifluoromethanesulfonyl) imide (CsTFSI: $Cs^+(CF_3SO_2)_2N^-$) and 18-crown-6 were added to the electrolyte in the compositions shown in Table 1.

**Comparative Examples 6 to 12**

Rechargeable lithium battery cells were manufactured in the same manner as in Comparative Example 1, except that cesium bis(trifluoromethanesulfonyl) imide (CsTFSI: $Cs^+(CF_3SO_2)_2N^-$) and 12-crown-4 were added to the electrolyte in the compositions shown in Table 2.

**Comparative Examples 13 to 20**

Rechargeable lithium battery cells were manufactured in the same manner as in Comparative Example 1, except that cesium bis(fluorosulfonyl) imide (CsFSI: $Cs^+(FSO_2)_2N^-$) and 18-crown-6 were added to the electrolyte in the

compositions shown in Table 3.

**Evaluation 1: Evaluation of DC Resistance Increase Rate after High-temperature Storage**

The rechargeable lithium battery cells according to Examples 1 to 8 and Comparative Examples 1 to 20 were measured with respect to initial DC resistance (DCIR) as △V/△I (change in voltage / change in current), and after changing a maximum energy state inside the battery cells into a full charge state (SOC 100%) and storing the cells in this state at a high temperature (60 °C) for 30 days, the cells was measured with respect to DC resistance to calculate a DCIR increase rate (%) according to Equation 1, and the results are shown in Tables 1 to 3.

[Equation 1]

$$\text{DCIR Increase rate} = (\text{DCIR after 30 days} - \text{Initial DCIR}) / \text{Initial DCIR} \times 100\%$$

**Evaluation 2: Evaluation of High-temperature Storage Characteristics**

The rechargeable lithium battery cells according to Examples 1 to 8, Reference Examples 1 to 11, and Comparative Examples 1 to 20, after measuring initial discharge capacity, were charged to 4.5 V under a constant current at 0.2 C and cut off at 0.05 C to evaluate high-temperature storage characteristics in the charge state of 4.5 V.

Then, the cells charged at 4.5 V were allowed to stand at 60° C for 30 days and then, measured with respect to open circuit voltage (OCV) variations, and the results are shown in Tables 1 to 3.

The initial OCV was 4.477 V.

(Table 1)

<table>
<tr><th rowspan="2"></th><th colspan="3">Additives</th><th rowspan="2">Soluble or not</th><th>Initial</th><th colspan="2">After 30 days</th><th rowspan="2">DC-IR incre ase rate (%)</th><th rowspan="2">OCV variat ion (V)</th></tr>
<tr><th>CsTFSI (parts by weight)</th><th>18-crown-6 (parts by weight)</th><th>Mixin 9 ratio (w:w)</th><th>DCIR (mΩ)</th><th>DCIR (mΩ)</th><th>OCV (V)</th></tr>
<tr><td>Comp. Ex, 1</td><td>-</td><td>-</td><td>-</td><td>-</td><td>31.5</td><td>43.47</td><td>4.278</td><td>38</td><td>0.199</td></tr>
<tr><td>Comp. Ex, 2</td><td>(0.2)</td><td>-</td><td>-</td><td>○</td><td>31.6</td><td>42.41</td><td>4.291</td><td>34</td><td>0.186</td></tr>
<tr><td>Comp. Ex, 3</td><td>(0.5)</td><td>-</td><td>-</td><td>X</td><td colspan="5">-</td></tr>
<tr><td>Comp. Ex, 4</td><td>-</td><td>5</td><td>-</td><td>○</td><td>32.1</td><td>44.62</td><td>4.276</td><td>39</td><td>0.201</td></tr>
<tr><td>Comp. Ex, 5</td><td>-</td><td>10</td><td>-</td><td>X</td><td colspan="5">-</td></tr>
<tr><td>Ref. Ex. 1</td><td rowspan="7">(0.5)</td><td>1.0</td><td>1:2</td><td>X</td><td colspan="5">-</td></tr>
<tr><td>Ref. Ex. 2</td><td>1.5</td><td>1:3</td><td>X</td><td colspan="5">-</td></tr>
<tr><td>Ex. 1</td><td>2.0</td><td>1:4</td><td>○</td><td>32.0</td><td>41.30</td><td>4.293</td><td>29</td><td>0.184</td></tr>
<tr><td>Ex. 2</td><td>5.0</td><td>1:10</td><td>○</td><td>32.2</td><td>41.61</td><td>4.294</td><td>29</td><td>0.183</td></tr>
<tr><td>Ex. 3</td><td>8.0</td><td>1:16</td><td>○</td><td>32.3</td><td>41.78</td><td>4.292</td><td>29</td><td>0.185</td></tr>
<tr><td>Ref. Ex. 3</td><td>10</td><td>1:20</td><td>X</td><td colspan="5">-</td></tr>
<tr><td>Ref. Ex. 4</td><td>15</td><td>1:30</td><td>X</td><td colspan="5">-</td></tr>
</table>

(continued)

| | Additives | | | Soluble or not | Initial | After 30 days | | DC-IR incre ase rate (%) | OCV variat ion (V) |
|---|---|---|---|---|---|---|---|---|---|
| | CsTFSI (parts by weight) | 18-crown-6 (parts by weight) | Mixin 9 ratio (w:w) | | DCIR (mΩ) | DCIR (mΩ) | OCV (V) | | |
| Ref. Ex. 5 | (1.0) | 3.0 | 1:3 | X | - | | | | |
| Example 4 | | 4.0 | 1:4 | ○ | 32.4 | 40.80 | 4.297 | 26 | 0.180 |
| Ex. 5 | | 5.0 | 1:5 | ○ | 32.4 | 40.83 | 4.296 | 26 | 0.181 |
| Ex. 6 | | 8.0 | 1:8 | ○ | 32.5 | 40.93 | 4.296 | 26 | 0.181 |
| Ref. Ex. 6 | | 10 | 1:10 | X | - | | | | |
| Ref. Ex. 7 | (1.25) | 3.75 | 1:3 | X | - | | | | |
| Ex. 7 | | 5.0 | 1:4 | ○ | 32.4 | 40.18 | 4.297 | 24 | 0.180 |
| Ex. 8 | | 7.5 | 1:6 | ○ | 32.5 | 40.42 | 4.296 | 24 | 0.181 |
| Ref. Ex. 8 | | 10 | 1:8 | X | - | | | | |
| Ref. Ex. 9 | (2.5) | 5.0 | 1:2 | X | - | | | | |
| Ref. Ex. 10 | | 7.0 | 1:3 | X | - | | | | |
| Ref. Ex. 11 | | 10 | 1:4 | X | - | | | | |

Referring to Table 1, the addition of the second compound (18-crown-6) improves the solubility of the first compound (CsTFSI), thereby improving the high-temperature characteristics of the battery cells, that is, resistance increase suppression and storage characteristics.

That is, the high-temperature characteristics of the battery cells may be remarkably improved by the combined use of the first compound and the second compound.

(Table 2)

| | Additives | | | Soluble or not | Initial | After 30 days | | DC-IR increas e rate (%) | OCV variat ion (V) |
|---|---|---|---|---|---|---|---|---|---|
| | CsTFSI (parts by weight) | Second compound (parts by weight) | Mixing ratio (w:w) | | DCIR (mΩ) | DCIR (mΩ) | OCV (V) | | |
| Comp. Ex, 1 | - | - | - | - | 31.5 | 43.47 | 4.278 | 38 | 0.199 |
| Comp. Ex, 2 | (0.2) | - | - | ○ | 31.6 | 42.41 | 4.291 | 34 | 0.186 |
| Comp. Ex, 3 | (0.5) | - | - | X | - | | | | |
| Comp. Ex, 6 | - | 12-crown-4 (5.0) | - | ○ | 32.4 | 44.93 | 4.272 | 39 | 0.205 |
| Comp. Ex, 7 | - | 12-crown-4 (10) | - | X | - | | | | |

(continued)

| | Additives | | | Soluble or not | Initial | After 30 days | | DC-IR increas e rate (%) | OCV variat ion (V) |
|---|---|---|---|---|---|---|---|---|---|
| | CsTFSI (parts by weight) | Second compound (parts by weight) | Mixing ratio (w:w) | | DCIR (mΩ) | DCIR (mΩ) | OCV (V) | | |
| Ex. 1 | (0.5) | 18-crown-6 (2.0) | 1:4 | ○ | 32.0 | 41.30 | 4.293 | 29 | 0.184 |
| Ex. 2 | | 18-crown-6 (5.0) | 1:10 | ○ | 32.2 | 41.61 | 4.294 | 29 | 0.183 |
| Comp. Ex, 8 | | 12-crown-4 (1.0) | 1:2 | X | - | | | | |
| Comp. Ex, 9 | | 12-crown-4 (2.0) | 1:4 | X | - | | | | |
| Comp. Ex, 10 | | 12-crown-4 (5.0) | 1:10 | X | - | | | | |
| Comp. Ex, 11 | | 12-crown-4 (10) | 1:20 | X | - | | | | |
| Comp. Ex, 12 | | 12-crown-4 (20) | 1:40 | X | - | | | | |

Referring to Table 2, even though 12-crown-4 as a second compound was added in the same amount as that of 18-crown-6, the second compound turned out not to contribute to improving solubility of the first compound (CsTFSI), exhibiting that high-temperature characteristics of battery cells were not expected to improve despite the combination thereof.

(Table 3)

| | Additives | | | Soluble or not | Initial | After 30 days | | DC-IR increase rate (%) | OCV variation (V) |
|---|---|---|---|---|---|---|---|---|---|
| | First compound (parts by weight) | 18-crown-6 (parts by weight) | Mixing ratio (w:w) | | DCIR (mΩ) | DCIR (mΩ) | OCV (V) | | |
| Comp. Ex, 1 | - | - | - | - | 31.5 | 43.47 | 4.278 | 38 | 0.199 |
| Comp. Ex, 2 | CsTFSI (0.2) | - | - | ○ | 31.6 | 42.41 | 4.291 | 34 | 0.186 |
| Comp. Ex, 3 | CsTFSI (0.5) | - | - | X | - | | | | |
| Comp. Ex, 4 | - | 5 | - | ○ | 32.1 | 44.62 | 4.276 | 39 | 0.201 |
| Comp. Ex, 5 | - | 10 | - | X | - | | | | |
| Ex. 1 | CsTFSI (0.5) | 2.0 | 1:4 | ○ | 32.0 | 41.30 | 4.293 | 29 | 0.184 |
| Ex. 2 | | 5.0 | 1:10 | ○ | 32.2 | 41.61 | 4.294 | 29 | 0.183 |

(continued)

| | Additives | | | Soluble or not | Initial | After 30 days | | DC-IR increase rate (%) | OCV variation (V) |
|---|---|---|---|---|---|---|---|---|---|
| | First compound (parts by weight) | 18-crown-6 (parts by weight) | Mixing ratio (w:w) | | DCIR (mΩ) | DCIR (mΩ) | OCV (V) | | |
| Comp. Ex, 13 | CsFSI (0.4) | 0.8 | 1:2 | X | - | | | | |
| Comp. Ex, 14 | | 1.6 | 1:4 | X | - | | | | |
| Comp. Ex, 15 | | 2.0 | 1:5 | X | - | | | | |
| Comp. Ex, 16 | | 4.0 | 1:10 | X | - | | | | |
| Comp. Ex, 18 | | 8.0 | 1:20 | ○ | 32.6 | 42.75 | 4.293 | 31 | 0.184 |
| Comp. Ex, 19 | | 10 | 1:25 | X | - | | | | |
| Comp. Ex, 20 | CsFSI (0.5) | 10 | 1:20 | X | - | | | | |

Referring to Table 3, when CsFSI as imide cesium salt was used instead of the first compound, since a second compound was required to be used in an excessive amount to improve solubility of CsFSI, which relatively significantly reduced the amount of CsFSI within a range of not deteriorating battery characteristics of a battery, the high-temperature characteristics improvement effect was difficult to expect.

Although the preferred embodiments of the present invention have been described above, the present invention is not limited thereto, and it is possible to carry out various modifications within the scope of the claims and the detailed description of the invention and the accompanying drawings, and these may also fall within the scope of the invention.

## Claims

1. An electrolyte for a rechargeable lithium battery, comprising

a non-aqueous organic solvent,
a lithium salt, and
an additive,
wherein the additive is a composition including a first compound, and a second compound,
the first compound is an imide cesium salt compound represented by Chemical Formula 1,
the second compound is a crown ether compound represented by Chemical Formula 2:

[Chemical Formula 1]

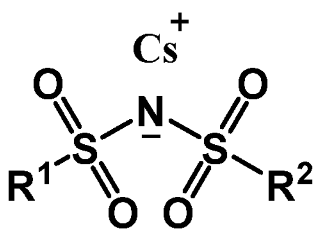

wherein, in Chemical Formula 1,

$R^1$ and $R^2$ are a C1 to C3 fluoroalkyl group substituted with one or more fluoro group,

[Chemical Formula 2]

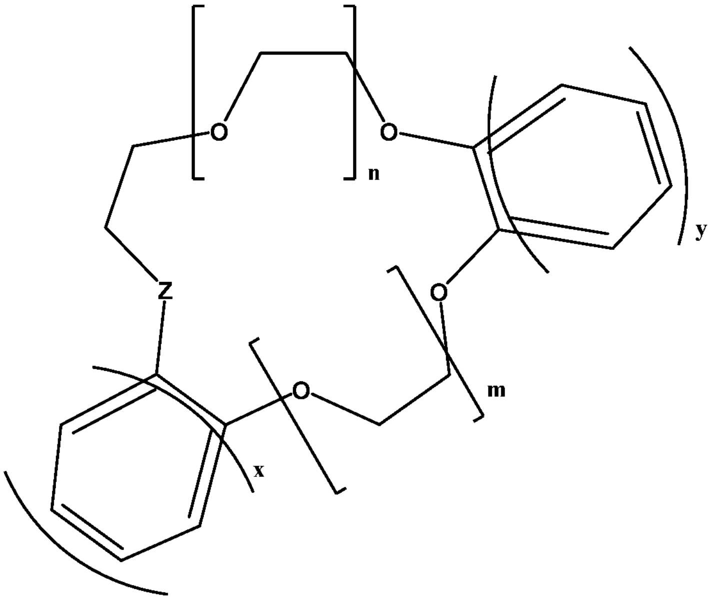

wherein, in Chemical Formula 2,
Z is O or NH,
x and y are independently an integer of 0 or 1, and
m and n are independently one of integers of 1 to 3.

**2.** The electrolyte for the rechargeable lithium battery of claim 1, wherein the first compound is represented by any one of Chemical Formulas 1-1 to 1-3:

[Chemical Formula 1-1] [Chemical Formula 1-2]

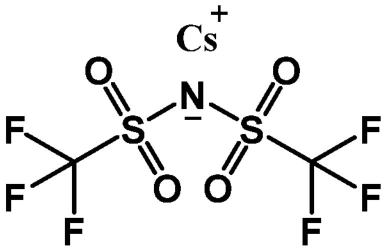

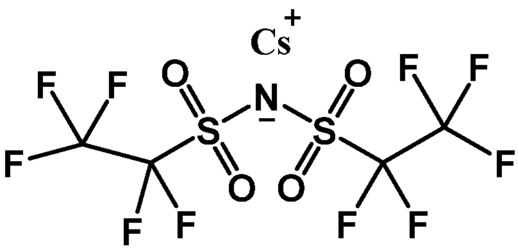

[Chemical Formula 1-3]

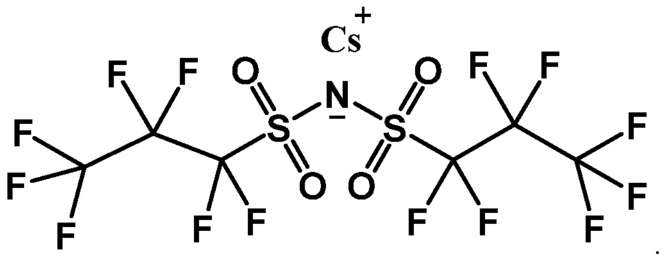

3. The electrolyte for the rechargeable lithium battery of claim 1, wherein the composition includes the first compound and the second compound in a weight ratio of 1 : 4 to 1 : 16.

4. The electrolyte for the rechargeable lithium battery of claim 1, wherein the composition includes the first compound and the second compound in a weight ratio of 1 : 4 to 1 : 8.

5. The electrolyte for the rechargeable lithium battery of claim 1, wherein the first compound is included in an amount of 0.1 to 2.0 parts by weight based on 100 parts by weight of the electrolyte for the rechargeable lithium battery.

6. The electrolyte for the rechargeable lithium battery of claim 1, wherein the second compound is included in an amount of 0.1 to less than 10 parts by weight based on 100 parts by weight of the electrolyte for the rechargeable lithium battery.

7. The electrolyte for the rechargeable lithium battery of claim 1, wherein the composition including the first compound and the second compound is included in an amount of 0.5 to less than 10 parts by weight based on 100 parts by weight of the electrolyte for the rechargeable lithium battery.

8. The electrolyte for the rechargeable lithium battery of claim 1, wherein

the second compound is a crown ether compound represented by any one of Chemical Formulas 2-1 to 2-3:

[Chemical Formula 2-1]

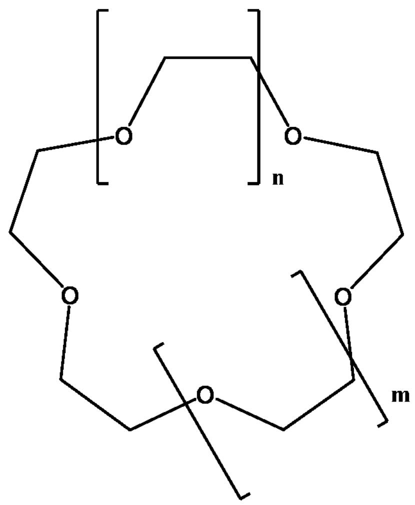

[Chemical Formula 2-2]

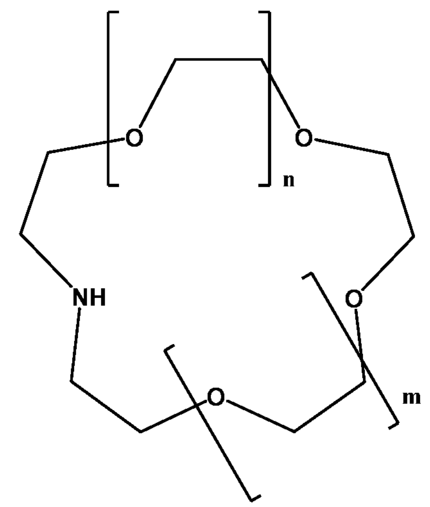

[Chemical Formula 2-3]

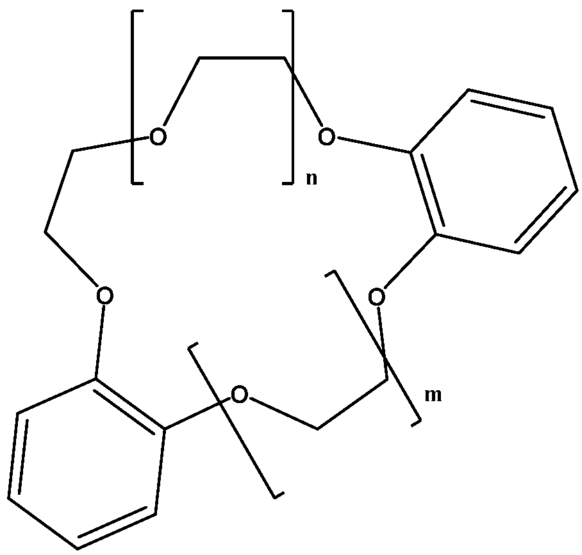

wherein, in Chemical Formulas 2-1 to 2-3,
m and n are independently one of integers of 1 to 3.

**9.** The electrolyte for the rechargeable lithium battery of claim 1, wherein
the second compound is one or more selected from 15-crown-5, 18-crown-6, 21-crown-7, 24-crown-8, dibenzo-15-crown-5, dibenzo-18-crown-6, dibenzo-21-crown-7, dibenzo-24-crown-8, 1-aza-15-crown-5, 1-aza-18-crown-6, 1-aza-21-crown-7, and 1-aza-24-crown-8.

**10.** A rechargeable lithium battery, comprising

positive electrode including a positive electrode active material;
a negative electrode including a negative electrode active material; and
the electrolyte for the rechargeable lithium battery of any one of claim 1 to claim 9.

**11.** The rechargeable lithium battery of claim 10, wherein
the negative electrode active material is graphite or includes a Si composite and graphite together.

**12.** The rechargeable lithium battery of claim 11, wherein
the Si composite include a core including Si-based particles and an amorphous carbon coating layer.

**13.** The rechargeable lithium battery of claim 12, wherein
the Si-based particle include a Si-C composite, $SiO_x$ ($0 < x \leq 2$), a Si alloy or a mixture thereof.

**14.** The rechargeable lithium battery of claim 13, wherein

the Si-C composite includes a core including Si particles and crystalline carbon and an amorphous carbon coating layer on the surface of the core, and
an average particle diameter of the Si particles is 50 nm to 200 nm.

FIG. 1

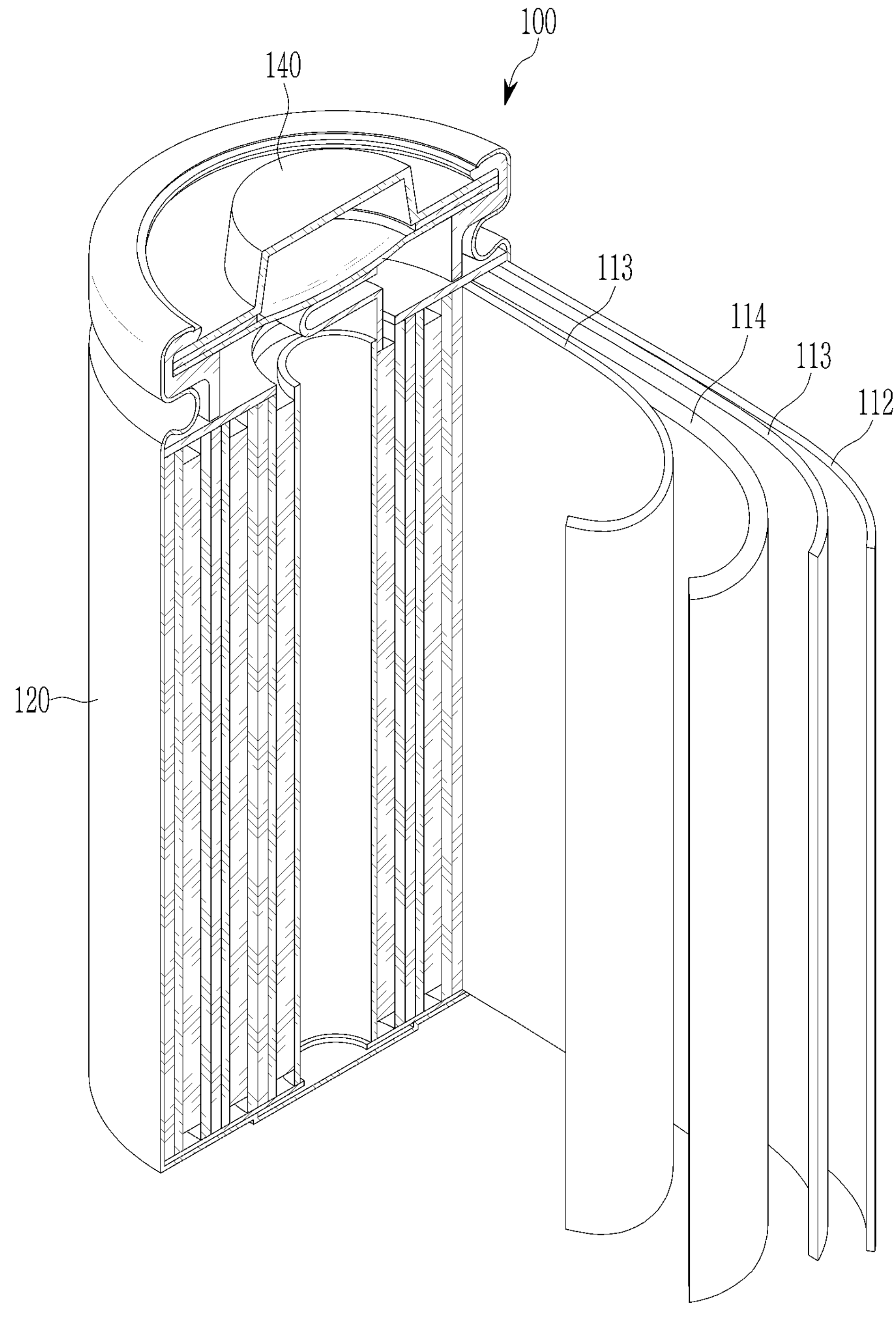

## INTERNATIONAL SEARCH REPORT

International application No.
**PCT/KR2022/004545**

**A. CLASSIFICATION OF SUBJECT MATTER**

**H01M 10/0567**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/054(2010.01); H01M 10/0568(2010.01); H01M 10/0569(2010.01); H01M 6/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (registry, caplus) & keywords: 리튬 이차전지(lithium secondary battery), 전해액(electrolyte), 첨가제(additive), 이미드 세슘염(imide cesium), 크라운 에테르(crown ether)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2018-0027996 A (SOULBRAIN CO., LTD.) 15 March 2018 (2018-03-15)<br>See claims 1-17; and paragraph [0071]. | 1-14 |
| Y | JP 2017-117592 A (KYOTO UNIV et al.) 29 June 2017 (2017-06-29)<br>See claim 1; and paragraphs [0017]-[0020]. | 1-14 |
| Y | KR 10-2021-0119143 A (SAMSUNG SDI CO., LTD.) 05 October 2021 (2021-10-05)<br>See paragraphs [0097]-[0107]. | 12-14 |
| A | CN 105006579 A (ZHUHAI SMOOTHWAY ELECTRONIC MATERIALS CO., LTD.) 28 October 2015 (2015-10-28)<br>See abstract; claim 1; and paragraphs [0023]-[0024]. | 1-14 |
| A | KR 10-2016-0034194 A (TOYOTA JIDOSHA KABUSHIKI KAISHA et al.) 29 March 2016 (2016-03-29)<br>See claim 1; paragraph [0028]; and table 1. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 October 2022** | **12 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.
**PCT/KR2022/004545**

| Patent document cited in search report | Publication date (day/month/year) | Patent family member(s) | Publication date (day/month/year) |
|---|---|---|---|
| KR 10-2018-0027996 A | 15 March 2018 | KR 10-1980315 B1 | 20 May 2019 |
| | | KR 10-1980317 B1 | 20 May 2019 |
| | | KR 10-1980319 B1 | 20 May 2019 |
| | | KR 10-2018-0027998 A | 15 March 2018 |
| | | KR 10-2018-0028000 A | 15 March 2018 |
| JP 2017-117592 A | 29 June 2017 | None | |
| KR 10-2021-0119143 A | 05 October 2021 | CN 115004437 A | 02 September 2022 |
| | | WO 2021-194074 A1 | 30 September 2021 |
| CN 105006579 A | 28 October 2015 | None | |
| KR 10-2016-0034194 A | 29 March 2016 | CN 105449280 A | 30 March 2016 |
| | | CN 105449280 B | 05 January 2018 |
| | | EP 2999044 A1 | 23 March 2016 |
| | | EP 2999044 B1 | 13 December 2017 |
| | | JP 2016-062821 A | 25 April 2016 |
| | | JP 6018146 B2 | 02 November 2016 |
| | | KR 10-1949041 B1 | 15 February 2019 |
| | | KR 10-2017-0125308 A | 14 November 2017 |
| | | US 2016-0087308 A1 | 24 March 2016 |
| | | US 9991560 B2 | 05 June 2018 |

Form PCT/ISA/210 (patent family annex) (July 2019)